# EUROPEAN PATENT SPECIFICATION

(11) **EP 3 974 486 B1**
(45) Date of publication and mention of the grant of the patent: **27.05.2026**
(21) Application number: 20810071.9
(22) Date of filing: 22.05.2020
(51) Int. Cl.: C09D 11/033, C09D 11/037, C09D 11/50, C09D 11/10, C09D 11/102, B32B 27/08, B32B 27/16, B32B 7/022, B32B 7/12, B65D 65/38, B65D 79/02

(54) **PH-SENSITIVE INDICATOR PACKAGING MATERIAL USING PH-SENSITIVE COLOR-CHANGING INK COMPOSITION**
PH-EMPFINDLICHES VERPACKUNGSMATERIAL MIT EINEM INDIKATOR UMFASSEND EINE PH-EMPFINDLICHE FARBWECHSELNDE TINTENZUSAMMENSETZUNG
MATÉRIAU D'EMBALLAGE AVEC UNE INDICATRICE COMPRENANT UNE COMPOSITION D'ENCRE CHANGEANT DE COULEUR SENSIBLE AU PH

(30) Priority: 22.05.2019 KR 20190060222
(43) Date of publication of application: 30.03.2022
(73) Proprietor: CJ Cheiljedang Corporation, Seoul 04560 (KR)
(72) Inventor: KIM, Do Wan, Seoul 04560 (KR); CHO, Jason, Seoul 04560 (KR); KIM, Grace, Seoul 04560 (KR); HONG, Seok Jun, Seoul 04560 (KR)
(74) Representative: J A Kemp LLP
(86) International application number: PCT/KR2020/006706
(87) International publication number: WO 2020/235962

(56) References cited:
- EP-A1- 1 266 944
- WO-A1-01/10471
- JP-A- 2002 129 139
- JP-A- 2003 072 857
- KR-A- 20010 110 636
- KR-A- 20170 068 142
- KR-A- 20180 037 736
- KR-B1- 101 820 857
- US-A1- 2010 224 508

## Description

### TECHNICAL FIELD

The present disclosure relates to a pH-sensitive indicator label and a packaging material using a pH-sensitive color-changing ink composition, and more particularly, to a pH-sensitive indicator label and a packaging material using a pH-sensitive color-changing ink composition capable of changing into various colors according to pH changes due to mixing of a plurality of pH color-changing dyes and preparation of a pH-sensitive indicator.

### BACKGROUND ART

Recently, foods are packaged and sold in packaging materials, and consumers are increasingly demanding foods by checking the freshness and condition of the foods as well as the quantity, quality, convenience, and stability of the foods when purchasing foods.

The freshness and condition of food packaged in a packaging material may change over time, but there is a problem in that it is difficult to check the freshness and condition of the food until the food is checked by opening the packaging material. In order to solve such a problem, an indicator that may allow checking the freshness and condition of food without opening the packaging material has been developed.

However, the conventional indicator has the following problems. The freshness and condition of food may change in various ways over time, but the conventional indicator has a problem in that it is difficult to inform consumers by reflecting all conditions of food that changed in various ways.

For example, in the case of kimchi, kimchi may be freshly made kimchi, at a proper ripe stage, or at a post ripe stage over time, but the conventional indicator has a problem in that it is difficult to inform consumers by reflecting all conditions of food that changed in various ways.

A packaging provided with an indicator label for detecting freshness of a food product inside the packaging is described in KR2018/0037736 A.

### DESCRIPTION OF EMBODIMENTS

### TECHNICAL PROBLEM

The present disclosure relates to a pH-sensitive indicator label and a packaging material using a pH-sensitive color-changing ink composition capable of changing in various colors according to pH changes by mixing a plurality of pH color-changing dyes and producing a pH-sensitive indicator.

### SOLUTION TO PROBLEM

The present invention relates to a pH-sensitive indicator packaging material using an ink composition of which color change changes by a reaction, as defined in claim 1.

According to an aspect of the present disclosure, there is provided a pH-sensitive indicator label including a pH-sensitive color-changing ink composition layer including a pH-sensitive color-changing ink composition; a first film on which the pH-sensitive color-changing ink composition layer is formed; and a second film laminated to the first film so as to cover the pH-sensitive color-changing ink composition formed on the first film, wherein the pH-sensitive color-changing ink composition of the pH-sensitive color-changing ink composition layer includes: a pH-sensitive indicator prepared by mixing a plurality of pH color-changing dyes of which colors change according to pH ranges; and a dissolving ink capable of dissolving the pH-sensitive indicator.

The first film may be formed as a barrier film that blocks an inflow of gas, and the second film may be formed as a porous or breathable film through which the gas passes.

The second film may be formed as a white film or a colored film.

A color of the colored film may be a complementary color of a color represented by the pH-sensitive color-changing ink composition, an initial color represented by the pH-sensitive color-changing ink composition, or a complete color represented by the pH-sensitive color-changing ink composition.

A non-color-changing ink composition layer may be formed on the first film on which the pH-sensitive color-changing ink composition is formed, and the non-color-changing ink composition layer may include at least one of a white ink composition layer or a colored ink composition layer.

An indicator layer including the color-changing ink composition layer formed on the first film may include the pH-sensitive color-changing ink composition and the non-color-changing ink composition, and the indicator layer of the first film may be formed by alternating the at least one pH-sensitive color-changing ink composition and at least one non-color-changing ink composition on one surface of the first film.

A color of the colored ink composition may be a complementary color of a color represented by the pH-sensitive color-changing ink composition, an initial color represented by the pH-sensitive color-changing ink composition, or a complete color represented by the pH-sensitive color-changing ink composition.

The second film may be formed as a transparent film.

The pH-sensitive color-changing ink composition layer may include a plurality of layers.

The pH-sensitive indicator label may further include a pouch into which the first film on which the pH-sensitive color-changing ink composition layer is formed and the second film are inserted, wherein one surface of the pouch may be formed of a porous or breathable film.

The second film may be integrally with one surface of the pouch.

The pH-sensitive color-changing ink composition of the pH-sensitive color-changing ink composition layer may further include an adsorption compound capable of adsorbing a gas.

The pH-sensitive indicator label using the pH-sensitive color-changing ink composition may be attached to a container into which a product is inserted and a through hole is formed in an area not in contact with the product, and the pH-sensitive indicator label using the pH-sensitive color-changing ink composition may be attached to the container so as to cover the through hole of the container.

According to another aspect of the present disclosure, there is provided a pH-sensitive indicator packaging material including a container into which a product may be inserted; a through hole passing through the container in an area not in contact with the product; and a label attached to the through hole, wherein the label includes a pH-sensitive color-changing ink composition layer including a pH-sensitive color-changing ink composition; a first film on which the pH-sensitive color-changing ink composition layer is formed; and a second film laminated to the first film so as to cover the pH-sensitive color-changing ink composition formed on the first film, wherein the pH-sensitive color-changing ink composition of the pH-sensitive color-changing ink composition layer includes: a pH-sensitive indicator prepared by mixing a plurality of pH color-changing dyes of which colors change according to pH ranges; and a dissolving ink capable of dissolving the pH-sensitive indicator, wherein the label is attached to the containerwhile covering the through hole, and a gas generated from the product is moveable to the label through the through hole.

According to another aspect of the present disclosure, there is provided a pH-sensitive indicator packaging material including a container into which a product is inserted; and a pH-sensitive color-changing ink composition layer including a pH-sensitive color-changing ink composition formed inside the container in an area not in contact with the product, wherein the pH-sensitive color-changing ink composition of the pH-sensitive color-changing ink composition layer includes: a pH-sensitive indicator prepared by mixing a plurality of pH color-changing dyes of which colors change according to pH ranges; and a dissolving ink capable of dissolving the pH-sensitive indicator.

A through-hole may be formed inside a portion of the container including the pH-sensitive color-changing ink composition layer of the pH-sensitive indicator packaging material.

### ADVANTAGEOUS EFFECTS OF DISCLOSURE

The present disclosure may enable an ink composition to change in various colors according to pH changes by mixing a plurality of pH color-changing dyes and producing a pH-sensitive indicator, thereby informing consumers of various conditions of a product.

In addition, the present disclosure may determine the condition of the product through a gas generated from the product, thereby determining the condition of the product in a non-contact manner with the product. In addition, the present disclosure may use white and colored ink compositions and white and colored films, thereby improving visibility of a pH-sensitive color-changing ink composition.

### BRIEF DESCRIPTION OF DRAWINGS

FIGS. 1(a) and 1(b) are diagrams illustrating a label using a pH-sensitive color-changing ink composition according to an embodiment of the present disclosure.
FIGS. 2 (a) to 2 (c) are diagrams illustrating a non-color-changing ink composition layer according to an embodiment of the present disclosure.
FIGS. 3(a) to 3(c) are diagrams illustrating an arrangement relationship between a color-changing ink composition layer and a non-color-changing ink composition layer according to an embodiment of the present disclosure.
FIGS. 4(a) and 4(b) are diagrams illustrating lamination of a second film of a label using a pH-sensitive color-changing ink composition onto a first film through a glue according to an embodiment of the present disclosure.
FIGS. 5(a) and 5(b) are diagrams illustrating a label that uses a pH-sensitive color-changing ink composition and is in a pouch form according to an embodiment of the present disclosure.
FIG. 6 is a diagram illustrating a packaging material to which a label using a pH-sensitive color-changing ink composition is attached according to an embodiment of the present disclosure.
FIGS. 7(a) and 7(b) are diagrams illustrating that a label is attached to a through hole of a packaging material using a pH-sensitive color-changing ink composition according to an embodiment of the present disclosure.
FIGS. 8 (a) and 8 (b) are diagrams illustrating that an ink composition is directly printed on a packaging material using a pH-sensitive color-changing ink composition according to an embodiment of the present disclosure.
FIG. 9 is a diagram illustrating a color-changing ink composition consisting of a plurality of layers.
FIG. 10 is a diagram illustrating an embodiment in which a label is attached to a container in which a through hole is formed, kimchi is put into the container, and a test is performed according to an embodiment of the present disclosure.
FIG. 11 is a visibility comparison between an embodiment in which a colored ink composition layer is formed according to the embodiment of the present disclosure and a comparative example in which the colored ink composition layer is not formed.

### BEST MODE

According to an aspect of the present disclosure, there is provided a pH-sensitive indicator label including a pH-sensitive color-changing ink composition layer including a pH-sensitive color-changing ink composition; a first film on which the pH-sensitive color-changing ink composition layer is formed; and a second film laminated to the first film so as to cover the pH-sensitive color-changing ink composition formed on the first film, wherein the pH-sensitive color-changing ink composition of the pH-sensitive color-changing ink composition layer includes: a pH-sensitive indicator prepared by mixing a plurality of pH color-changing dyes of which colors change according to pH ranges; and a dissolving ink capable of dissolving the pH-sensitive indicator.

According to another aspect of the present disclosure, there is provided a pH-sensitive indicator packaging material including a container into which a product may be inserted; a through hole passing through the container in an area not in contact with the product; and a label attached to the through hole, wherein the label includes a pH-sensitive color-changing ink composition layer including a pH-sensitive color-changing ink composition; a first film on which the pH-sensitive color-changing ink composition layer is formed; and a second film laminated to the first film so as to cover the pH-sensitive color-changing ink composition formed on the first film, wherein the pH-sensitive color-changing ink composition of the pH-sensitive color-changing ink composition layer includes: a pH-sensitive indicator prepared by mixing a plurality of pH color-changing dyes of which colors change according to pH ranges; and a dissolving ink capable of dissolving the pH-sensitive indicator, wherein the label is attached to the container while covering the through hole, and a gas generated from the product is moveable to the label through the through hole.

According to another aspect of the present disclosure, there is provided a pH-sensitive indicator packaging material including a container into which a product is inserted; and a pH-sensitive color-changing ink composition including a pH-sensitive color-changing ink composition layer formed inside the container in an area not in contact with the product, wherein the pH-sensitive color-changing ink composition of the pH-sensitive color-changing ink composition layer includes: a pH-sensitive indicator prepared by mixing a plurality of pH color-changing dyes of which colors change according to pH ranges; and a dissolving ink capable of dissolving the pH-sensitive indicator.

### MODE OF DISCLOSURE

The present specification clarifies a scope of the present disclosure, describes principles of the present disclosure, and discloses embodiments such that those skilled in the art to which the present disclosure pertains may practice the present disclosure. The disclosed embodiments may be implemented in various forms.

Expressions such as "include" or "may include" that may be used in various embodiments of the present disclosure indicate presence of corresponding disclosed function, operation, component, or so on, and do not limit one or more additional functions, operations, components, or so on. In addition, it should be understood that, in various embodiments of the present disclosure, terms such as "include" or "have" are intended to designate that feature, number, step, operation, configuration element, component, or combination thereof described in the specification are present, and possibility of addition or presence of one or more other features, numbers, steps, operations, configuration elements, components, or combinations thereof is not precluded.

Hereinafter, embodiments of the present disclosure will be described in detail with reference to the accompanying drawings.

A pH-sensitive indicator label 200 using a pH-sensitive color-changing ink composition according to an embodiment of the present disclosure includes a pH-sensitive color-changing ink composition layer 100, a first film 210, and a second film 230.

The pH-sensitive color-changing ink composition layer 100 includes the pH-sensitive color-changing ink composition, the pH-sensitive color-changing ink composition includes a pH-sensitive indicator and a dissolving ink, and the pH-sensitive indicator is prepared by mixing a plurality of pH color-changing dyes of which colors change according to pH ranges.

In order to inform consumers of various conditions of a product, it is necessary to change colors according to the various conditions of the product. However, since a pH color-changing dye changes only in two or three colors according to pH ranges, there is a problem in that it is difficult to reflect all the various conditions of the product.

The pH-sensitive indicator is to solve this problem, and is prepared by mixing a plurality of pH color-changing dyes, and may provide a pH-sensitive color-changing ink composition that may change in various colors according to pH changes through the pH-sensitive indicator.

The pH-sensitive indicator may use a pigment whose color changes by a pH change, and a type thereof is not particularly limited, but one or more, two or more, three or more, or four or more types selected from the group consisting of, for example, Alizarin Blue, Methyl Violet, o- Cresol Red, Crystal Violet, Erythrosin, Thymol Blue, m-Cresol Red, Methyl Violet 6B, Amino Aminoazobenzene, Alizarin Yellow R, β-Dinitrophenol(2,6-Dinitrophenol), Methyl Orange, Congo Red, p-Ethyl Orange, Naphthyl Red, Methyl Red, Carminic acid, Chlorophenol Red, Bromothymol Blue, Phenol Red, Neutral Red, Bromocresol green and Phenolphthalein, may be mixed. Alternatively, two or more types, or three or more types, or four or more types may be mixed in order to represent more various changes.

According to an embodiment of the present disclosure, the pH-sensitive indicator may be prepared by mixing one or more, two or more, three or more, or four or more types among Thymol Blue, Methyl red, Bromothymol blue, Phenolphthalein, Phenol Red, and Bromocresol green, which may be selectively combined in order to reflect various conditions of the product. Alternatively, two or more types, or three or more types, or four or more types may be mixed in order to represent more various changes.

According to another embodiment of the present disclosure, the pH-sensitive indicator may be prepared by mixing four pH color-changing dyes, and may be prepared by mixing Thymol Blue, Methyl red, Bromothymol blue and Phenolphthalein.

Thymol blue has a red color when pH is less than 2, a yellow color in the period of 2 < pH < 7, and a blue color when pH is greater than 7. Methyl red has a red color when pH is less than 5, and a yellow color when pH is greater than 5.

Bromothymol blue has a yellow color when pH is less than 6, and a blue color when pH is greater than 6. Phenolphthalein is colorless in the period of 0 < pH < 8, has a pink color in the period of 8 < pH < 10, and a purple color when pH is greater than 10.

As described above, since the pH color-changing dyes change only in two or three colors according to pH ranges, it is impossible to express various conditions of the product, whereas when the pH-sensitive indicator is prepared by mixing two or more types, or three or more types, or four or more types of pH color-changing dyes, various color changes are possible according to pH ranges.

According to an embodiment, the content of Thymol Blue may be 0.1% to 10% of the total content of the pH-sensitive indicator, the content of Methyl red may be 0.1% to 10%, the content of Bromothymol blue may be 0.1% to 10%, and the content of Phenolphthalein may be 0.1% to 10%. Each content may be changed in various ways according to a characteristic of a material of the product to be indicated, the content of the product, and a color to be represented by the indicator layer.

According to another specific embodiment, when Thymol Blue of 0.01 g, Methyl red of 0.02 g, Bromothymol blue of 0.33 g, and Phenolphthalein of 0.19 g are mixed to prepare the pH-sensitive indicator, the pH-sensitive indicator has a red color in the period of 1 < pH < 2, has an orange color in the period of 2 < pH < 4, has a yellow color in the period of 4 < pH < 5, has a green color in the period of 6 < pH < 7, and has blue and purple colors in the period where pH is greater than 7.

As described above, the pH-sensitive indicator according to the embodiment of the present disclosure is prepared by mixing a plurality of pH color-changing dyes, and thus the pH-sensitive indicator may variously change colors according to pH changes, thereby expressing conditions of the product variously..

According to an embodiment of the present disclosure, the pH-sensitive ink composition may include a non-color-changing ink composition. The non-color-changing ink composition may further include a pH non-sensitive colored ink composition and/or a white ink composition. The pH non-sensitive colored ink composition and/or the white ink composition may be a single layer formed from a single composition, and each of the pH-sensitive indicator and a color-changing ink composition layer formed from the color-changing ink composition may include a non-color-changing ink composition layer formed from the non-color-changing ink composition.

As such, visibility may be improved by mixing the color-changing ink composition and the non-color-changing ink composition. In addition, the non-color-changing ink composition is used when forming the indicator layer including the color-changing ink composition and the non-color-changing ink composition, which reduces an amount of color-changing ink used in a process of forming the indicator layer, thereby expecting a cost reduction.

The white ink composition may be used to clearly represent the color of the indicator layer, thereby increasing the visibility of a color change when the color of the indicator layer changes. The white ink composition is formed by a composition including white ink, and the white ink composition may use one or more pigments selected from the group consisting of inorganic pigments and white organic pigments such as titanium dioxide, zinc oxide, lithopon, zinc sulfide (ZnS), lead white, antimony shite, etc.

Any non-color-changing ink composition may be used as long as the color does not change due to a color-changing factor to be checked using a food indicator, and specifically, any non-color-changing ink composition may be used as long as the color does not change due to a color change factor of the color-changing ink composition. More specifically, the non-color-changing ink composition may use a pigment that does not change color due to a pH change.

The type of the non-color-changing ink composition is not particularly limited, but, for example, while not changing colors due to an external environmental factor, a non-color-changing ink composition capable of increasing visibility by making a color change of a mixed color more distinct when combined with ink used as the color-changing ink composition may be selected. For example, the non-color-changing ink composition may include at least one pigment implementing white, yellow, red, brown, green, blue, black, gold and silver colors or a mixed color thereof, alone or in combination.

The content of the pigment in the ink composition for forming the indicator layer, for example, the color-changing ink composition, the non-color-changing ink composition, or a mixed composition of color-changing and non-color-changing inks, may be variously formed. For example, with respect to the total weight of the ink composition, the ink composition may include the pigment so that the color-changing ink composition is 1 to 10 wt% and the non-color-changing ink composition is 0.05 to 2 wt%.

For example, when a pigment composition of the above range is included in the ink composition and the color-changing ink composition and the non-color-changing ink composition are mixed to form the indicator layer, although a degree of change in the indicator layer is reduced by reducing the content of the color-changing ink composition, the visibility of the indicator layer may be increased compared to when the non-color-changing ink composition is not used. More specifically, a change in the indicator layer in which the color-changing ink composition and the non-color-changing ink composition are mixed may be easily identified because conditions such as color, brightness, and saturation of an initial indicator layer are easily contrasted with conditions such as color, brightness, and saturation of a final indicator layer.

The dissolving ink is capable of dissolving the pH-sensitive indicator, and the pH-sensitive indicator is dissolved in the dissolving ink while being stirred with the dissolving ink. The dissolving ink may dissolve the pH color-changing dye and the pH-sensitive indicator, may have printing properties, consist of a variety of transparent multi-faceted materials that the ink composition may express its own color, and may be capable of including not only thermosetting but also UV curability.

The dissolving ink may include an ethanol-type urethane resin, and more specifically, for example, an ethanol-type urethane resin, an additive including a wax acting as a lubricant, an antistatic agent preventing static electricity, an antifoaming agent for preventing air generation, and an ethanol solvent, and the ethanol-type urethane resin is used because the pH color-changing dye is dissolved in ethanol.

Here, according to an embodiment, the dissolving ink may include 25 to 45% by weight of a resin, 1 to 3% by weight of an additive, and 52 to 74% by weight of a solvent, and when the pH-sensitive indicator is stirred in the dissolving ink, a weight ratio of the pH-sensitive indicator to the weight of the dissolving ink may be 0.4 to 5%. According to an embodiment, the dissolving ink may consist of 35 g of resin, 0.5 g of wax, 1 g of an antistatic agent, 1 g of an antifoaming agent, and 62.5 g of ethanol.

When the color change of the color-changing ink composition is insignificant, it is difficult to recognize the color change from the outside. To the contrary, when the color change of the color-changing ink composition changes too sensitively, there is a problem in that it is difficult to represent a target color according to a condition of the product.

However, according to an embodiment, when the weight ratio of the pH-sensitive indicator to the weight of the dissolved ink is 0.4 to 5%, it may be possible to prevent the color change of the ink composition from being insufficient or changing too sensitively, and accordingly, the visibility may be improved.

However, the content ratio of the dissolved ink and the weight ratio of the pH-sensitive indicator to the weight of the dissolved ink are not limited thereto, and may be changed according to the dissolved ink and the pH color-changing dye used.

The pH-sensitive color-changing ink composition according to an embodiment of the present disclosure may be changed in a plurality of colors according to pH changes through the pH-sensitive indicator, and gas may be used to induce a pH change in the pH-sensitive color-changing ink composition. The color of the pH-sensitive color-changing ink composition may be changed according to a pH change when the pH-sensitive variable-color ink composition adsorbs gas.

An adsorption compound is capable of adsorbing gas, and a final ink composition is formed while being stirred with the dissolving ink. The adsorption compound is a chemical composition that may sense the gas to change from acidic to basic or basic to acidic, and various materials may be used if the pH may be changed according to the gas.

Here, the pH-sensitive color-changing ink composition according to an embodiment of the present disclosure includes the pH-sensitive indicator, the dissolved ink, and the adsorption compound, and the order of mixing the pH-sensitive indicator, the dissolved ink, and the adsorption compound is not limited.

Specifically, after the pH-sensitive indicator is stirred in the dissolving ink, the adsorption compound may be stirred in the dissolving ink, and after the adsorption compound is stirred in the dissolving ink, the pH-sensitive indicator may be dissolved in the dissolving ink. In addition, after the pH-sensitive indicator and the adsorption compound are stirred, the pH-sensitive indicator and the adsorption compound may be stirred in the dissolving ink.

The adsorption compound may change the pH of the color-changing ink composition while adsorbing a volatile compound, and more specifically, may change the pH of the color-changing ink composition by reacting with a volatile gas such as carbon dioxide, ammonia, acetic acid, total volatile basic amine, volatile basic nitrogen, H2S, etc. More specifically, a component that changes the pH in the present disclosure may be carbon dioxide.

The adsorption compound may be a material that changes the pH of the dissolving ink while being stirred with the dissolving ink. Specifically, the adsorption compound may be a material that changes the pH of the dissolving ink in a direction opposite to a direction in which the pH is changed by the reaction of the ink composition.

According to an embodiment, when the adsorption compound is stirred in the dissolving ink, the pH of the dissolving ink may be changed to basic, and when the ink composition reacts with the gas, the pH may be changed to acidic.

The adsorption compound may be polyethylene imine. Polyethylene imine is capable of adsorbing carbon dioxide, and polyethylene imine is a polymer material that changes the ink composition to basic while being stirred with the dissolving ink. The ink composition in which polyethylene imine is stirred is basic, and then changed to acidic as it adsorbs carbon dioxide.

When the adsorption compound is included in the scope of the present disclosure, it is possible to minimize tack during printing, thereby having the advantage of being able to apply the process without a separate chemical or mechanical treatment.

When the adsorption compound, more specifically, polyethylene imine, is stirred in the dissolved ink in which the pH-sensitive indicator is stirred, the weight ratio of the adsorption compound to the weight of the dissolved ink may be 0.5 to 20%, more specifically 0.5 to 15%, more specifically 0.5 to 10%, more specific upper limit of the content may be selected from 9.5%, 9%, and 8%, and the lower limit may be selected from 0.5%, 1%, and 2%. More specifically, the weight ratio of the adsorption compound to the weight of the dissolving ink may be 0.5 to 9.5% or 0.5 to 9%.

Within the adsorption compound is included in the scope of the present disclosure, more specifically equal to or less than 15%, more specifically equal to or less than 10%, it is possible to minimize tack during printing, thereby having the advantage of being able to apply the process without a separate chemical or mechanical treatment.

When the product is kimchi, the weight ratio of the adsorption compound to the weight of the dissolved ink may be 5 to 20%, and in the above range, a target color may be recognized according to the condition of kimchi.

However, the weight ratio of the adsorption compound to the weight of the dissolved ink is not limited thereto, and the weight ratio of the adsorption compound may be changed according to the pH of a target initial ink composition.

**[Table 1]**

| pH INDICATOR | | | | TRANSPARENT INK | ADSORPTION COMPOUND |
|---|---|---|---|---|---|
| 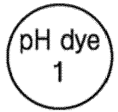 | 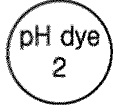 | 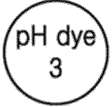 | 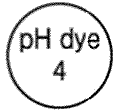 | ETHANOL-TYPE POLYURETHANE | POLYETHYLENE IMINE |

Table 1 above shows types of the pH-sensitive indicator, the dissolving ink, and the adsorption compound for changing the color of the ink composition by sensing carbon dioxide through the pH-sensitive color-changing ink composition according to an embodiment of the present disclosure.

The above-described pH-sensitive color-changing ink composition according to an embodiment of the present disclosure is capable of changing the color of the color-changing ink composition by sensing carbon dioxide, and may be used in a kimchi packaging material. As kimchi in kimchi packaging material matures, it generates carbon dioxide. Therefore, as the color-changing ink composition adsorbs carbon dioxide, the pH is changed, and accordingly, a degree of ripening of kimchi may be known.

When the color-changing ink composition is applied to kimchi packaging material, the color-changing ink composition may be printed on a first film or a packaging material container. In order to print the ink composition on the first film or the packaging material container, the viscosity of the color-changing ink composition needs to be adjusted, and for this purpose, the color-changing ink composition may be diluted with a diluent.

Hereinafter, specific embodiments of the present disclosure will be described.

**[Table 2]**

| CLASSIFICATION | | | COMPOSITION 1 (g) | COMPOSITION 2 (g) | COMPOSITION 3 (g) | COMPOSITION 4 (g) |
|---|---|---|---|---|---|---|
| TRANSPARENT INK | RESIN | ETHANOL-TYPE URETHANE | 35 | 35 | 35 | 35 |
| | ADDITIVE | Wax | 0.5 | 0.5 | 0.5 | 0.5 |
| | | ANTISTATIC AGENT | 1 | 1 | 1 | 1 |
| | | ANTIFOAMING AGENT | 1 | 1 | 1 | 1 |
| | SOLVENT | ETHANOL | 62.5 | 62.5 | 62.5 | 62.5 |
| pH INDICATOR | pH DYE | Thymol Blue | 0.01 | 0.01 | 0.01 | 0.01 |
| | | Methyl red | 0.02 | 0.02 | 0.02 | 0.02 |
| | | Bromothymol Blue | 0.33 | 0.33 | 0.33 | 0.33 |
| | | Phenolphthalein | 0.19 | 0.19 | 0.19 | 0.19 |
| ADSORPTION COMPOUND | | POLYETHYLENE IMINE 1 % | - | 1.0 | - | - |
| | | POLYETHYLENE IMINE 1.5 % | - | - | 1.5 | - |
| | | POLYETHYLENE IMINE 2.5 % | - | - | - | 2.5 |
| DILUENT | | PMA or ETHANOL | 50 | 50 | 50 | 50 |

Table 2 above shows types and content ratios of the pH-sensitive indicator, the dissolving ink, and the adsorption compound for changing the color of the ink composition by sensing carbon dioxide through the color-changing ink composition according to an embodiment of the present disclosure.

Referring to Tables 1 and 2 above, the pH-sensitive indicator may be prepared by mixing a pH color-changing dye consisting of Thymol Blue, Methyl red, Bromothymol blue, and Phenolphthalein, and may be prepared by mixing Thymol Blue, 0.02 g of Methyl red, 0.33 g of Bromothymol blue and 0.19 g of Phenolphthalein.

Referring to Table 2 above, the weight of the diluent consists of preferably 45 to 55% (or 50%) with respect to the weight of the dissolving ink and is mixed with the ink composition. The diluent may be Propylene Glycol Monomethyl Ether Acetate (PMA) or ethanol, but is not limited thereto, and various diluents may be used.

A color of the color-changing ink composition may be changed by adsorbing carbon dioxide generated according to the degree of ripening of kimchi, and accordingly, the condition of kimchi may be identified.

Referring to Tables 1 and 2, in order to determine the condition of kimchi through the color-changing ink composition, the pH-sensitive indicator may be prepared by mixing four pH color-changing dyes consisting of Thymol Blue, Methyl red, Bromothymol blue, and Phenolphthalein, and the dissolving ink may be prepared through an ethanol-type urethane resin, wax, antistatic agent, and defoaming agent.

In addition, in order to change the pH of the color-changing ink composition by adsorbing carbon dioxide generated from kimchi, the adsorption compound may consist of polyethylene imine. Here, the polyethylene imine makes the color-changing ink composition basic while being stirred with the dissolving ink, and as it adsorbs carbon dioxide, the color of the color-changing ink composition is changed, while being gradually changed to acid. Polyethylene imine makes the color-changing ink composition basic, and in this case, the color-changing ink composition may have a blue color.

The color-changing ink composition according to the embodiment of the present disclosure described above shows the types and content ratios of the pH-sensitive indicator, the dissolving ink, and the adsorption compound for changing the color of the ink composition by sensing carbon dioxide, but is not limited thereto.

In the color-changing ink composition according to an embodiment of the present disclosure, the types and content ratios of the pH color-changing dye and the pH-sensitive indicator may be changed according to the gas to be adsorbed, and accordingly, the types and content ratios of the dissolving ink and the adsorption compound may also be changed.

**[Table 3]**

| CLASSIFICATION | | | COMPOSITION 4 (g) | COMPOSITION 5 (g) | COMPOSITION 6 (g) |
|---|---|---|---|---|---|
| TRANSPARENT INK | RESIN | ETHANOL-TYPE URETHANE | 35 | 35 | 35 |
| | ADDITIVE | Wax | 0.5 | 0.5 | 0.5 |
| | | ANTISTATIC AGENT | 1 | 1 | 1 |
| | | ANTIFOAMING AGENT | 1 | 1 | 1 |
| | SOLVENT | ETHANOL | 62.5 | 62.5 | 62.5 |
| Universal Indicator Dye | Dye | Thymol Blue | 0.06 | 0.25 | 0.06 |
| | | Methyl red | 0.14 | 0.25 | 0.14 |
| | | Bromothymol Blue | 0.68 | 0.25 | 0.68 |
| | | Phenolphthalein | 1.12 | 1.00 | 1.12 |
| | | Bromocresol green | - | 0.25 | - |
| PIGMENT | SCARLET PIGMENT | | - | - | 2.0 |
| PEI | | PEI 2.5 % | 2.5 | 2.5 | 2.5 |
| DILUENT | | ETHANOL | 50 | 50 | 50 |

Referring to Table 3 above, the pH-sensitive indicator of the color-changing ink composition according to another embodiment of the present disclosure is prepared by mixing the four pH color-changing dyes consisting of Thymol Blue, Methyl red, Bromothymol blue, and Phenolphthalein, or may be prepared by mixing the five pH color-changing dyes consisting of Thymol Blue, Methyl red, Bromothymol blue, Phenolphthalein, and Bromocresol green.

In addition, the color-changing ink composition according to another embodiment of the present disclosure may include a pigment having a color. The pigment may have the color to improve the visibility of the color-changing ink composition, and may be a scarlet pigment as shown in Table 3. However, the general pigment is not limited to scarlet, and may consist of various colors capable of improving the visibility.

The pigment may be stirred in the dissolved ink in which the pH-sensitive indicator is stirred, and when the pigment is stirred in the dissolved ink in which the pH-sensitive indicator is stirred, the weight ratio of the pigment to the dissolved ink may be 0.05 to 10%. However, the weight ratio of the pigment to the weight of the dissolved ink is not limited thereto, and may be changed according to the pigment used, the dissolved ink, and the pH color-changing dye.

As described in Table 2 above, when the pH-sensitive indicator is prepared by mixing the four pH color-changing dyes consisting of 0.01 g of Thymol Blue, 0.02 g of Methyl red, 0.33 g of Bromothymol blue, and 0.19 g of Phenolphthalein, if the adsorption compound adsorbs carbon dioxide generated in kimchi to change the pH of the color-changing ink composition, the color-changing ink composition may have a red color in the range equal to or less than pH 2, an orange color in the period of pH 2 to 4, a yellow color in the period of pH 4 to 5, a green color in the period of pH 5 to 7, and a blue color in the period equal to or greater than pH 7.

In this case, the color-changing ink composition has a first color (blue) in the period equal to or greater than pH 7, a second color (red) in the period equal to or less than pH 2, and a third color or two or more colors (orange, yellow, and green) different from the first color and the second color in the period of pH 2 to 7. (Here, the color may not change and be maintained constant in an immature stage of kimchi by preventing the color from changing in a region equal to or greater than pH 7 through Phenolphthalein.)

**[Table 4]**

| | IMMATURE STAGE | PROPER RIPE STAGE | OVER-RIPE STAGE |
|---|---|---|---|
| ACIDITY (LACTIC ACID CONVERSION) | 0.2 - 0.6 % | 0.6 - 1.1 % | 1.1 % - 1.3 % |
| pH | 4.6 OR MORE | 4.6 - 4.2 | 4.2 OR LESS |
| COLOR CHANGE | BLUE → GREEN | GREEN - YELLOW | YELLO ← RED |

Table 4 above shows the pH according to the degree of ripening of kimchi when the composition is according to composition 6 of Table 3, and shows that when kimchi is in the immature stage, the pH may be equal to or greater than 4.6, when kimchi is in the proper ripe stage, the pH may be 4.2 to 4.6, and when kimchi is in the over-ripe stage, the pH may be equal to or less than 4.2. According to an embodiment of the present disclosure, the color of the color-changing ink compositions according to compositions 1 to 4 may be changed according to the pH based on the degree of ripening of kimchi.

Specifically, the color-changing ink composition which is changed to basic by polyethylene imine has a blue color, and is changed to acid while adsorbing carbon dioxide generated in kimchi, and the color is changed. Referring to Table 4, the color-changing ink composition may have a first color (blue) at pH equal to or greater than 4.6 when kimchi is in the immature stage, and may have a second color (red) at pH equal to or less than 4.2 when kimchi is in the over-ripe stage.

In the proper ripe stage between the immature and over-ripe stages, kimchi has the pH 4.2 to 4.6. In this case, the color-changing ink composition may have a third color or may be changed to two or more colors (green- yellow) different from the first color and the second color.

That is, when kimchi is in the immature stage, the color-changing ink composition has a blue color (a first color), and when the pH falls below 4.6 when kimchi is in the proper ripe stage, the color-changing ink composition has a green color. Thereafter, kimchi may be changed to two or more colors in the proper ripe stage, and accordingly, kimchi may be changed from green to yellow between pH 4.6 and pH 4.2. The color-changing ink composition exhibiting a yellow color may be changed to a red color (a second color) again at the pH equal to or less than 4.2 when kimchi is in the over-ripe stage.

As described above, as the color of the color-changing ink composition changes, the degree of ripening of kimchi may be known. A meaningful part to a user among degrees of ripening of kimchi may be the proper ripe stage (pH 4.2 to pH 4.6), and accordingly, the state of the proper ripe stage may be subdivided and notified to the user. To this end, kimchi may be changed in two or more colors during the proper ripe stage.

Here, compared to the immature stage, a pH change region in the proper ripe stage and the over-ripe stage may be narrow. The color-changing ink composition according to an embodiment of the present disclosure forms the pH-sensitive indicator by mixing the plurality of pH color-changing dyes in order to change the color-changing ink composition under such conditions.

However, the color of the color-changing ink composition is not limited to being changed in the above-described pH range, the color of the pH range in which the color-changing ink composition is changed may be changed as necessary, and the pH range may be changed by changing the types and mixing ratios of the plurality of pH color-changing dyes. For example, since the maturity range and the pH range may be different depending on the components and composition ratio of the fermented food, the ink composition may be adjusted differently depending on the fermented food.

That is, the color-changing ink composition according to an embodiment of the present disclosure may have the first color in the pH of a first period, the second color in the pH of a second period, and the third color in the pH of a third period between the pH of the first period and the pH of the second period or be changed to two or more colors different from the first color and the second color.

The pH-sensitive color-changing ink composition layer 100 may be a layer formed using the above-described pH-sensitive color-changing ink composition. The pH-sensitive color-changing ink composition constituting the pH-sensitive color-changing ink composition layer 100 is the same as the above-described pH-sensitive color-changing ink composition, and thus a detailed description thereof will be omitted.

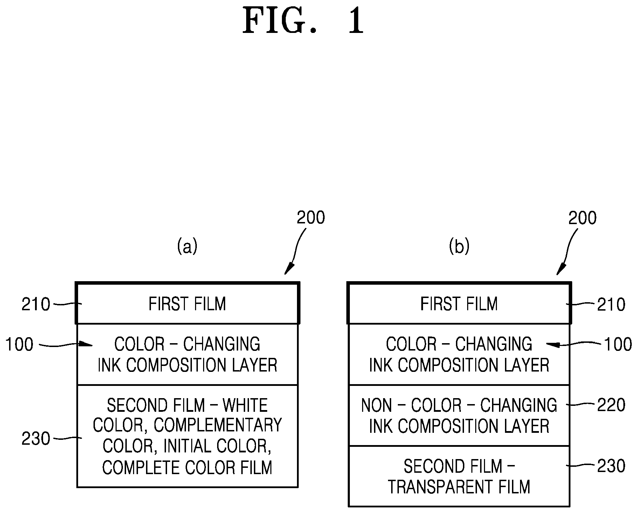

Referring to FIGS. 1(a) and 1(b), the first film 210 may be a barrier film that blocks the inflow of gas, and may include any one of polyethylene terephthalate (PET), nylon, and a transparent deposition film. The color-changing ink composition layer 100 may be formed on the first film 210, and the color-changing ink composition layer 100 may be formed by printing the color-changing ink composition on the first film 210.

When the color-changing ink composition layer 100 may be formed by printing the color-changing ink composition on the first film 210, the color-changing ink composition layer 100 may be formed by printing the color-changing ink composition toward the product.

When gas flows into the color-changing ink composition layer 100 from the outside of the product, the color of the color-changing ink composition layer 100 may be changed by the gas outside the product. To prevent this, the first film 210 according to an embodiment may be the barrier film capable of blocking the inflow of gas from the outside of the product.

In addition, since the user needs to recognize the color of the color-changing ink composition layer 100 printed on the inside of the first film 210, the first film 210 may be the transparent film. In FIGS. 1(a) to 1(b), the first film 210 may be PET, but is not limited thereto, and various films may be used as long as the first film 210 is a barrier transparent film.

FIG. 1(a) shows that the color-changing ink composition layer 100 is printed on the first film 210, and the color-changing ink composition layer 100 may be printed on the first film 210 through a gravure printing method.

Referring to FIG. 1(b), the user may recognize that the color of the color-changing ink composition layer 100 is changed from the outside of the first film 210, and the non-color-changing ink composition layer 220 may be formed on the first film 210 on which the color-changing ink composition layer 100 is printed in order to improve visibility of the user.

According to an embodiment of the present disclosure, the indicator layer including the color-changing ink composition layer may be formed on the first film 210. The indicator layer formed on the first film 210 includes the pH-sensitive color-changing ink composition and the non-color-changing ink composition. Here, the pH-sensitive color-changing ink composition may be changed sensitively to pH, and the non-color-changing ink composition may not be sensitive to pH.

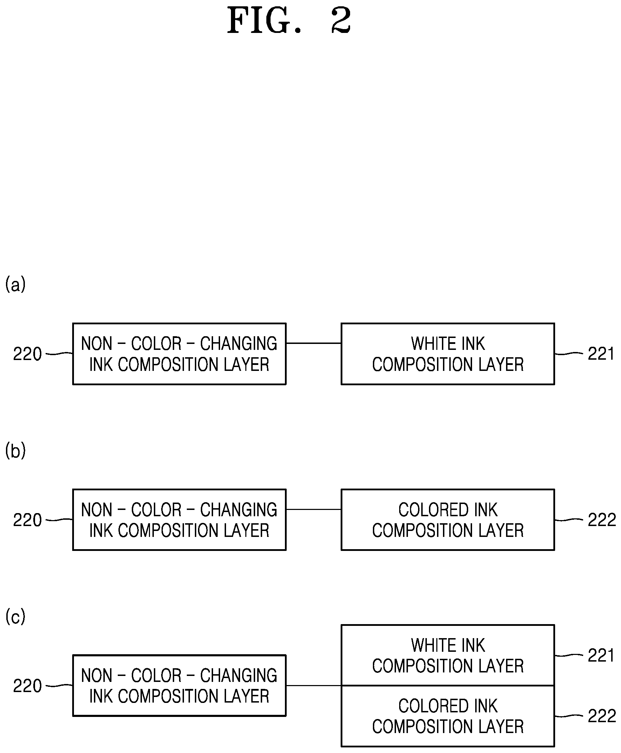

Referring to FIGS. 2(a) to 2(c), the non-color-changing ink composition layer 220 may be formed by printing a white ink composition and/or a colored ink composition, and the non-color-changing ink composition layer 220 may be a white ink composition layer 221 and/or a colored ink composition layer 222.

The non-color-changing ink composition layer 220 may include any one of the white ink composition layer 221 and the colored ink composition layer 222, and may include the white ink composition layer 221 and the colored ink composition layer 222 at the same time.

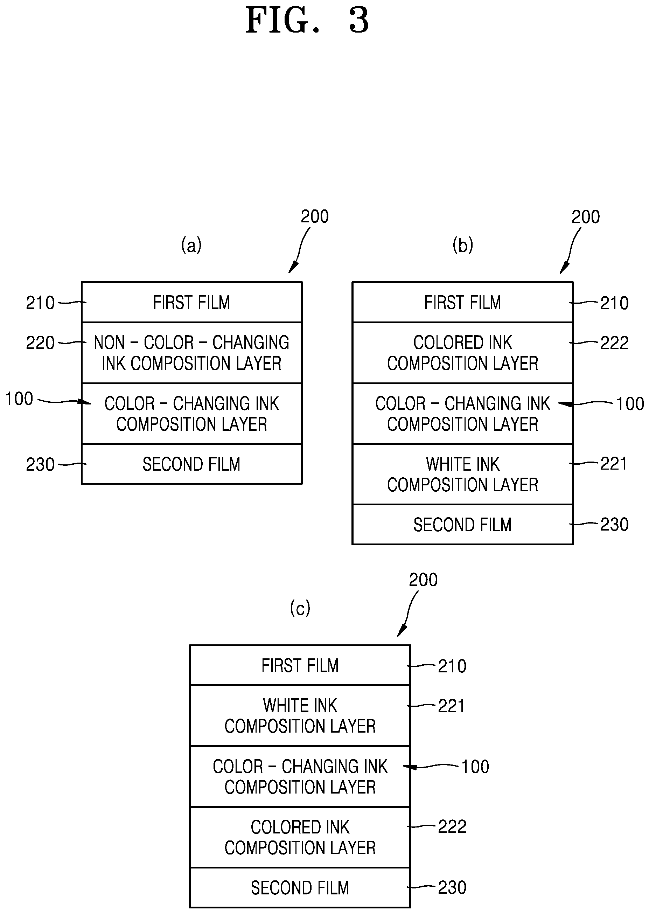

In addition, referring to FIGS. 1(b) and 3(a), the non-color-changing ink composition layer 220 may be formed on the side of the second film 230 with respect to the color-changing ink composition layer 100, and may be formed on the side of the first film 210 with respect to the color-changing ink composition layer 100.

In addition, referring to FIGS. 3(b) and 3(c), between the first film 210 and the second film 230, the colored ink composition layer 222 - the color-changing ink composition layer 100 - the white ink composition layer 221 may be sequentially arranged, and the white ink composition layer 221 - the color-changing ink composition layer 100 - the colored ink composition layer 222 may be sequentially arranged.

In addition, according to another embodiment of the present disclosure, the indicator layer of the first film 210 may be formed by alternating at least one pH-sensitive color-changing ink composition and at least one non-color-changing ink on one surface of the first film 210.

The colored ink composition layer 222 may be a complementary ink composition layer of a color represented by the pH-sensitive color-changing ink composition layer 100, an ink composition layer of an initial color represented by the color-changing ink composition layer 100 or the color-changing ink, or an ink composition layer of a complete color represented by the color-changing ink composition layer 100.

The color of the complementary ink composition layer may be a complementary color of a color intended to increase visibility to the user among the colors of the color-changing ink composition layer 100 of which color changes according to pH. Specifically, among the colors of the color-changing ink composition layer 100 of which color changes according to pH, a blue color (the complementary color) ink composition layer may be used to improve the visibility to the user with respect to an orange color, a purple color (the complementary color) ink composition layer may be used to improve the visibility to the user with respect to a green color, and an indigo color (the complementary color) ink composition layer may be used to improve the visibility to the user with respect to a yellow color.

The ink composition layer of the initial color represented by the color-changing ink composition layer 100 may have a color before the color of the color-changing ink composition layer 100 is changed by reacting with the gas. As described above, before the color-changing ink composition layer 100 reacts with the gas, the pH of the color-changing ink composition may be changed by stirring the adsorption compound in the dissolving ink.

For example, when polyethylene imine, which is the adsorption compound, is stirred in the dissolving ink, the color-changing ink composition may be changed to the blue color while changing to basic. (Thereafter, as carbon dioxide is adsorbed, basic changes to acid, and accordingly, the color of the color-changing ink composition layer 100 is changed.)

The ink composition layer of the initial color represented by the color-changing ink composition layer 100 may have the color before the color of the color-changing ink composition layer 100 is changed by reacting with the gas. When polyethylene imine is used, the ink composition layer of the initial color represented by the color-changing ink composition layer 100 may have the blue color.

When the ink composition layer of the initial color represented by the color-changing ink composition layer 100 is used, although a color change may not be sensed before the color-changing ink composition layer 100 reacts with the gas, it is confirmed that the color changes gradually. Therefore, there is an advantage in that the visibility of the user may be improved.

After the color of the color-changing ink composition layer 100 is changed by reacting with the gas, the ink composition layer of the complete color represented by the color-changing ink composition layer 100 mat have a color that no longer changes by the gas. For example, when the color of the color-changing ink composition layer 100 is changed by adsorbing carbon dioxide from kimchi, when the pH of the color-changing ink composition layer 100 is lower than that of a predetermined period, the color of the color-changing ink composition layer 100 may be uniformly red.

The complete color represented by the color-changing ink composition layer 100 may be red. As such, the complete color represented by the color-changing ink composition layer 100 may be a color that no longer changes by the gas.

In addition, the indicator layer may include the color-changing ink composition layer 100 consisting of a plurality of layers. The order in which the color-changing ink composition layer 100, the white ink composition layer, and the colored ink composition layer are arranged in the indicator layer may be changed according to visibility.

The second film 230 is laminated to the first film 210 so as to cover the pH-sensitive color-changing ink composition layer 100 formed on the first film 210. Referring to FIGS. 1(a) and 1(b), the second film 230 is disposed on the side facing the product from the color-changing ink composition layer 100, and in order for the gas generated from the product to reach the color-changing ink composition layer 100, the second film 230 may be a porous film capable of making the gas passing therethrough.

The second film 230 may be any one of Tyvek, linear low-density polyethylene (LLDPE), polyethylene (PE), CPP, and a porous film, but is not limited thereto. A variety of films may be used as long as gas may pass therethrough. Here, the second film 230 made of porosity is not only porous but also breathable, and may be a variety of films as long as gas may pass therethrough.

The second film 230 may be a white film or a colored film, through which visibility may be improved. Here, the colored film may be a film of the complementary color of the color represented by the color-changing ink composition layer 100, a film of the initial color represented by the color-changing ink composition layer 100, or a film of the complete color represented by the color-changing ink composition layer 100.

The color of the film of the complementary color may be a complementary color of a color intended to increase visibility to the user among the colors of the color-changing ink composition layer 100 of which color changes according to pH. Specifically, among the colors of the color-changing ink composition layer 100 of which color changes according to pH, a blue color (the complementary color) film may be used to improve the visibility to the user with respect to an orange color, a purple color (the complementary color) film may be used to improve the visibility to the user with respect to a green color, and an indigo color (the complementary color) film may be used to improve the visibility to the user with respect to a yellow color.

The film of the initial color represented by the color-changing ink composition layer 100 may have a color before the color of the color-changing ink composition layer 100 is changed by reacting with the gas. As described above, before the color-changing ink composition layer 100 reacts with the gas, the pH of the color-changing ink composition may be changed by stirring the adsorption compound in the dissolving ink.

For example, when polyethylene imine, which is the adsorption compound, is stirred in the dissolving ink, the color-changing ink composition layer 100 may be changed to the blue color while changing to basic. (Thereafter, as carbon dioxide is adsorbed, basic changes to acid, and accordingly, the color of the color-changing ink composition layer 100 is changed.)

According to an embodiment, the film of the initial color represented by the color-changing ink composition layer 100 may have the color before the color of the color-changing ink composition layer 100 is changed by reacting with the gas. When polyethylene imine is used, the film of the initial color represented by the color-changing ink composition layer 100 may have the blue color.

When the film of the initial color represented by the color-changing ink composition layer 100 is used, although a color change may not be sensed before the color-changing ink composition layer 100 reacts with the gas, it is confirmed that the color changes gradually. Therefore, there is an advantage in that the visibility of the user may be improved.

After the color of the color-changing ink composition layer 100 is changed by reacting with the gas, the film of the complete color represented by the color-changing ink composition layer 100 mat have a color that no longer changes by the gas. When the color of the color-changing ink composition layer 100 is changed by adsorbing carbon dioxide from kimchi, when the pH of the color-changing ink composition layer 100 is lower than that of a predetermined period, the color of the color-changing ink composition layer 100 may be uniformly red.

According to an embodiment, the film of the complete color represented by the color-changing ink composition layer 100 may be red. As such, the film of the complete color represented by the color-changing ink composition layer 100 may have a color that no longer changes by the gas.

In addition, the second film 230 may be a transparent film. When the white ink composition or the colored ink composition is printed on the first film 210, in order to prevent the colors of the second film 230 and the white ink composition or the colored ink composition from mixing, the second film 230 may be the transparent film.

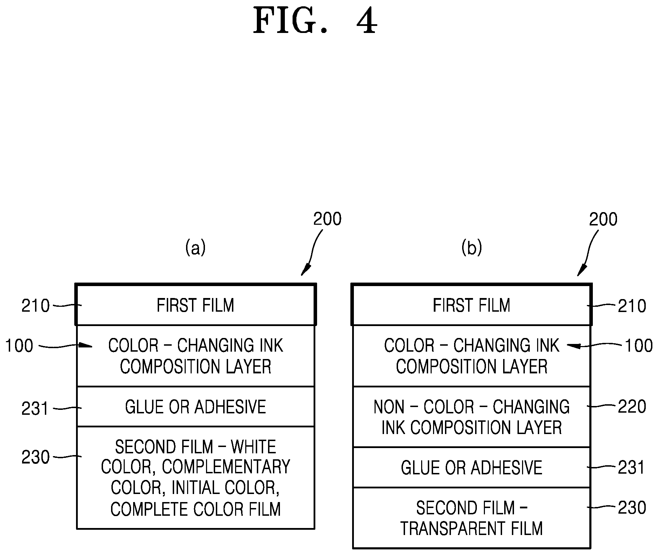

Referring to FIGS. 4(a) and 4(b), the second film 230 may be laminated to the first film 210 on which the color-changing ink composition layer 100 is printed through a glue or adhesive 231, and after the glue or adhesive 231 is coated on the second film 230, the second film 230 may be laminated to the first film 210. A urethane-based glue may be used as the glue or adhesive 231, and if the first film 210 and the second film 230 on which the color-changing ink composition layer 100 is printed may be laminated, various glues or adhesives may be used.

According to an embodiment of the present disclosure, the indicator layer may further include a white ink composition layer on one surface facing the glue or adhesive 231, and a step of combining the first film 210 and the second film 230 may include combining the first film 210 and the second film 230 so that the white ink composition layer 221 and the glue or adhesive 231 come into contact with each other. After laminating the second film 230 to the first film 210, the pH-sensitive indicator label 200 using the pH-sensitive color-changing ink composition according to another embodiment of the present disclosure may be used after attaching a release paper to the film 230 using a glue or adhesive.

The pH-sensitive indicator label 200 means a laminated film for pH-sensitive indication including a first film, a pH-sensitive color-changing ink composition layer and a second film according to an embodiment of the present disclosure, and may be in the form of a label or a packaging material. In the present disclosure, the packaging material is in a form that may contain contents, and the form is not limited, but may be in the form of, for example, a pouch, and includes the first film and the second film according to the present disclosure, and the pH-sensitive color-changing ink composition refers to a form included in at least a part of the packaging material where a partial color change is to be confirmed. All components applied to the label to be described below may be applied even when in the form of the packaging material.

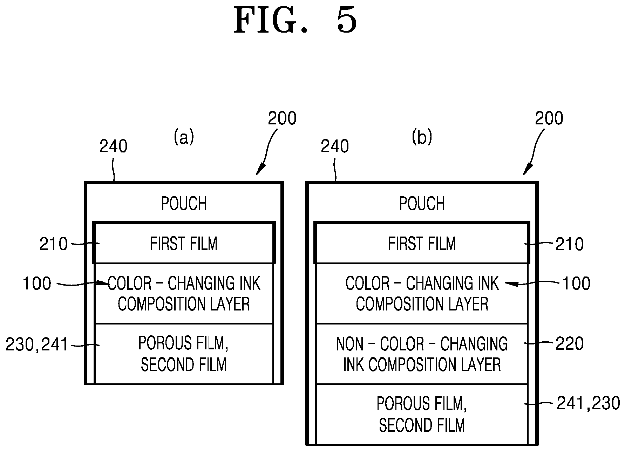

More specifically, referring to FIGS. 5A and 5B, a pouch 240 into which the first film 210 on which the color-changing ink composition layer 100 is printed and the second film 230 may be inserted, and one surface of the pouch 240 facing the color-changing ink composition layer 100 may be formed of a porous and breathable film 241.

One surface of the pouch 240 facing the color-changing ink composition layer 100 is a surface through which gas generated from the product may pass, and may be formed of the porous and breathable film 241 such as Tyvek through which the gas generated from the product may pass. The other surface of the pouch 240 may be made of a barrier film blocking the inflow of gas in order to prevent the gas outside the product from permeating through the color-changing ink composition layer 100, and may be made of low-density polyethylene (LDPE).

However, the pouch 240 is not limited thereto, and as long as the porous and breathable film 241 is provided on one surface of the pouch 240 facing the color-changing ink composition layer 100, and the barrier film is provided on the other surface, various materials may be used.

Here, the second film 230 may be formed integrally with one surface of the pouch 240. That is, when the pH-sensitive indicator label 200 using the pH-sensitive color-changing ink composition according to the embodiment of the present disclosure is prepared in the form of the pouch 240, one surface of the pouch 240 may be the second film 230, and the label 200 may be prepared in the form of a pouch by laminating one surface of the pouch 240 and the first film 210.

Referring to FIG. 5(b), when the pouch 240 is prepared, the non-color-changing ink composition layer 220 may be formed on the first film 210 on which the color-changing ink composition layer 100 is printed in order to improve the visibility of the user.

According to an embodiment of the present disclosure, an indicator layer including the color-changing ink composition layer 100 and the non-color-changing ink composition layer 220 may be formed on the first film 210. The indicator layer formed on the first film 210 includes the color-changing ink composition layer 100 and the non-color-changing ink composition layer 220. Here, the color-changing ink composition layer 100 may be changed sensitively to pH, and the non-color-changing ink composition layer 220 may not be sensitive to pH.

The non-color-changing ink composition layer 220 may be formed by printing a white ink composition and/or a colored ink composition, and the non-color-changing ink composition layer 220 may be a white ink composition layer 221 and/or a colored ink composition layer 222.

The non-color-changing ink composition layer 220 may include any one of the white ink composition layer 221 and the colored ink composition layer 222, and may include the white ink composition layer 221 and the colored ink composition layer 222 at the same time.

In addition, the non-color-changing ink composition layer 220 may be formed on the side of the second film 230 with respect to the color-changing ink composition layer 100, and may be formed on the side of the first film 210 with respect to the color-changing ink composition layer 100.

Between the first film 210 and the second film 230, the colored ink composition layer 222 - the color-changing ink composition layer 100 - the white ink composition layer 221 may be sequentially arranged, and the white ink composition layer 221 - the color-changing ink composition layer 100 - the colored ink composition layer 222 may be sequentially arranged.

The indicator layer of the first film 210 may be formed by alternately printing at least one pH-sensitive color-changing ink composition and at least one non-color-changing ink on one surface of the first film 210.

The colored ink composition layer 222 may be a complementary ink composition layer of a color represented by the pH-sensitive color-changing ink composition layer 100, an ink composition layer of an initial color represented by the color-changing ink composition layer 100 or the color-changing ink, or an ink composition layer of a complete color represented by the color-changing ink composition layer 100. The white ink composition layer 221 and the colored ink composition layer 222 have been described above, and thus detailed descriptions thereof will be omitted.

In addition, the porous film 241 on one surface of the pouch may be formed of a transparent film, a white film, or a colored film to improve visibility. (Here, one surface of the pouch may be integrally formed with the second film 230, and the second film 230 may be a transparent film, a white film, or a colored film.)

The colored film may be a film of a complementary color of the color represented by the color-changing ink composition layer 100, a film of an initial color represented by the color-changing ink composition layer 100 or a film of a complete color represented by the color-changing ink composition layer 100. A method of improving visibility using the white ink composition, the colored ink composition, the white film, and the colored film is the same as described above, and thus a detailed description thereof will be omitted.

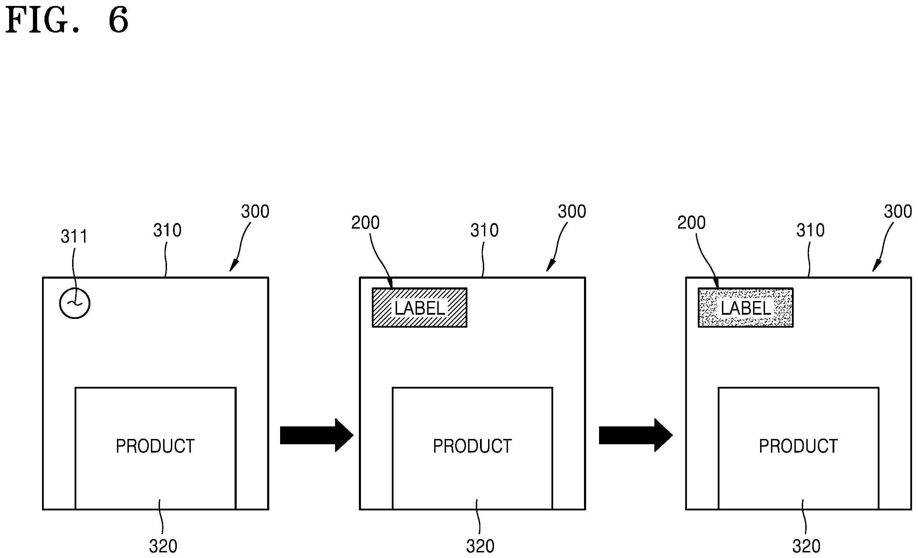

Referring to FIG. 6, the pH-sensitive indicator label 200 using the pH-sensitive color-changing ink composition according to an embodiment of the present disclosure may be used by being attached to the container 310 in which a product is inserted therein or the through hole 311 is formed in an area that does not come into contact with the product.

The pH-sensitive indicator label 200 using the pH-sensitive color-changing ink composition may be attached to the container 310 to cover the through-hole 311 of the container 310, and accordingly, there is an advantage that the label 200 may be easily applied by processing only a through-hole in a generally used container.

The pH-sensitive indicator packaging material 300 using the pH-sensitive color-changing ink composition according to an embodiment of the present disclosure includes the label 200, the container 310, and the through hole 311.

The label 200 is the same as the pH-sensitive indicator label 200 using the color-changing ink composition according to the embodiment of the present disclosure described above, and thus a detailed description of the label 200 as described above will be omitted.

The container 310 into which the product is inserted includes an internal space into which a product 320 may be inserted. The through hole 311 is a hole passing through the container 310 in an area not in contact with the product 320.

Referring to FIG. 6, when the product 320 is inserted into the container 310, the product 320 may be stored in a lower portion of the container 310. The through hole 311 passes through the container 310 in a portion not in contact with the product 320, and may be formed in an upper portion of the container 310 so as not to come into contact with the product 320.

The through hole is a passage through which the laminated film including the pH-sensitive color-changing ink composition may contact gas whose contents are generated over time. More specifically, when the laminated film is in the form of a label, due to the presence of the through hole, a development product may respond to whatever a material of a packaging material surface to which the label is applied. As long as movement of the gas is possible, it is not restricted by its shape, so the through hole may be linear, circular, prismatic, or a figure shape to be expressed. In the case of a packaging material, such as being inserted into a pouch instead of the label, the through hole which is a passage through which the gas may contact in various ways may be formed in a film inside the packaging material.

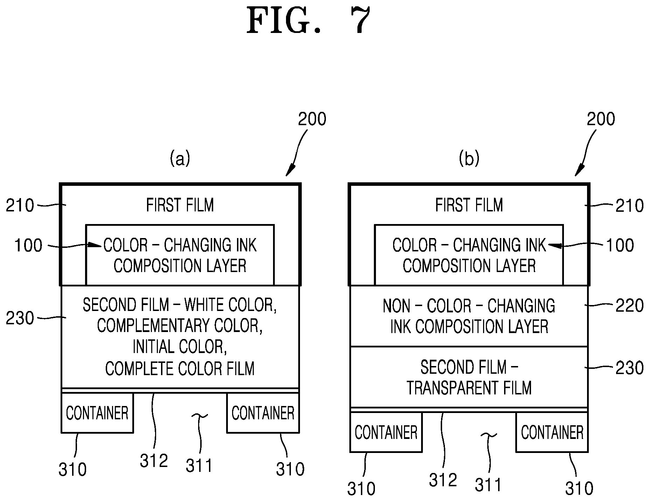

Referring to FIGS. 7(a) and 7(b), the label 200 may be attached while covering the through hole 311 from the outside of the container 310, the label 200 may be attached to the container 310 through the glue or adhesive 312.

As described above, when the label 200 is attached to the container 310 while covering the through hole 311, the gas generated from the product 320 through the through hole 311 may be movable to the label 200, and the color-changing ink composition layer 100 provided on the label 200 may adsorb the gas and accordingly its color be changed according to the pH as shown in FIG. 6.

When the through hole 311 is used, a color of the label 200 may be changed by the gas even when the label 200 is placed outside the container 310 without contact with the product 320. Hereinafter, the effect of the through hole 311 will be described.

In order to describe the effect of the through hole 311, a color-changing ink composition is prepared with a composition shown in Table 5 below.

**[Table 5]**

| MATERIAL NAME | (a) COMPOSITION Bromothymol blue | (b) COMPOSITION Bromothymol blue + Phenol red | (c) COMPOSITION Thymol blue + Phenol red |
|---|---|---|---|
| ETHANOL-TYPE BINDER | 100 | | |
| (TRANSPARENT INK), % | | | |
| Bromothymol blue, pt | 2.0 | 1.0 | |
| Phenol red, pt | - | 1.0 | 1.0 |
| Thymol blue, pt | - | - | 1.0 |
| PEI, % | 2.5 | | |

After the color-changing ink composition layer is printed and dried on a 12 µm PET film (a first film), the white ink composition is printed and dried, and a second film is adhered after the adhesive is applied. Thereafter, a gas-sensitive pH indicator label is prepared by applying the glue and adhering a release paper.

After the label is prepared, a kimchi storage test is performed through the label.

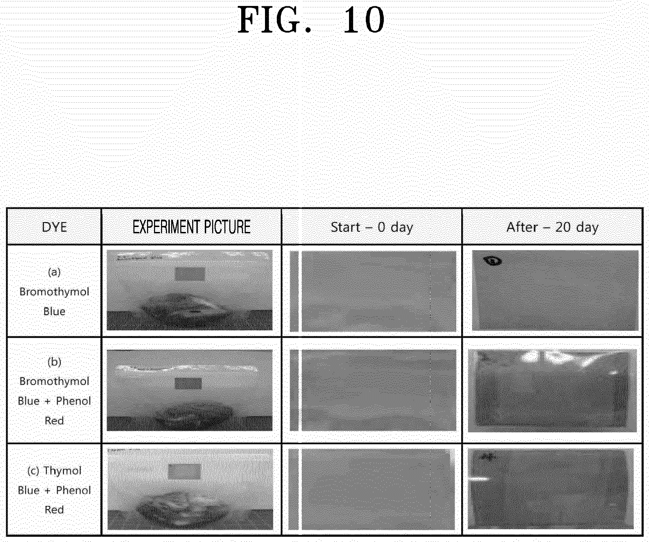

Specifically, after the pH-sensitive indicator label is attached to a pouch having a through hole containing 400 g of kimchi, the test is performed under the condition of 15 degrees, and a result thereof is shown in FIG. 10.

Referring to FIG. 10, as the container is manufactured by attaching the label to the through hole, it may be seen that a color change occurs only in a portion connected to the through hole. As described above, the color change occurs only in the portion connected to the through hole, and thus the visibility of the color change is improved.

Hereinafter, the effect of the non-color-changing ink composition layer formed as a colored ink composition layer will be described. In order to describe the effect of the colored ink composition layer, in the embodiment, first, the pH-sensitive color-changing ink composition is prepared by stirring 100 parts by weight of a urethane-based binder using ethanol as a solvent, 2 parts by weight of bromothymol blue, and 8 parts by weight of polyethyleneimine.

Next, a yellow colored ink composition layer (the non-color-changing ink composition layer) is printed on a 12 µm PET film (a first film) by the gravure method of item 175, and then dried. The color-changing ink composition prepared above is printed on the PET film on which the colored ink composition layer (the non-color-changing ink composition layer) is printed by the gravure printing method of item 175, and then dried. A white ink composition layer is printed on the ink layer formed above and dried to prepare a label.

In order to compare the effects of the colored ink composition layer, in a comparative example, a label is prepared in the same manner except for a portion forming the colored ink composition layer.

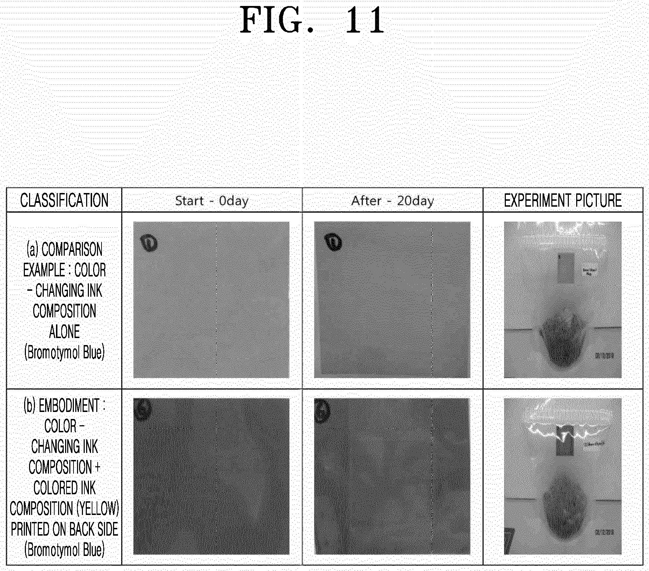

As described above, after the label according to the embodiment and the label according to the comparative example are prepared, and a kimchi storage test is performed through the label. Specifically, after the labels according to the embodiment and the comparative example are attached to a pouch having a through hole of 400 g of kimchi, the test is performed under the condition of 15 degrees, and a result thereof is shown in FIG. 11.

Referring to FIG. 11, it may be seen that the visibility is improved in the embodiment in which the colored ink composition layer is used in comparison with the comparative example in which the colored ink composition layer is not used. Specifically, the case of the embodiment (b) of FIG. 11 in which the color-changing ink composition + the colored ink composition (yellow) is printed on the back side is more clearly printed (a border of a color changed portion t is printed clearly) than the case of the comparative example (a) of FIG. 11 in which the color-changing ink composition is used alone so that it may be seen that the visibility is improved.

In addition, the non-color-changing ink composition layer 220 including at least one of the white ink composition layer 221 or the colored ink composition layer 222 may be formed on the first film 210, and the second film 230 may be formed as a white film, a colored film, or a transparent film. The above portion has been described above in the pH-sensitive indicator label 200 using the pH-sensitive color-changing ink composition according to an embodiment of the present disclosure, and thus a detailed description thereof will be omitted.

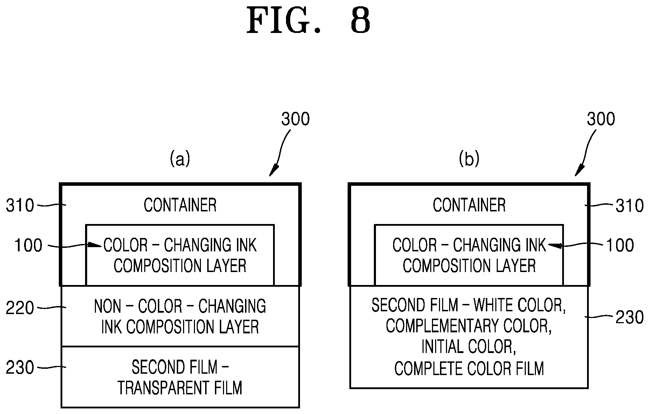

Referring to FIGS. 8(a) and 8(b), the pH-sensitive indicator packaging material 300 using a color-changing ink composition according to another embodiment of the present disclosure directly forms the color-changing ink composition layer 100 including a pH-sensitive color-changing ink composition on the container 310, and may include the container 310 and the pH-sensitive color-changing ink composition layer 100.

The container 310 into which a product is inserted and includes an internal space into which the product 320 may be inserted, and the pH-sensitive color-changing ink composition layer 100 may be printed on the inside of the container 310 in a region not in contact with the product 320.

The configuration and characteristics of the pH-sensitive indicator label 200 using the pH-sensitive color-changing ink composition according to another embodiment of the present disclosure may be applied to the pH-sensitive indicator packaging material 300 using the color-changing ink composition according to another embodiment of the present disclosure, and the configuration and characteristics of the label 200 may be applied by changing the first film 210 to the container 310 in the label 200.

In addition, the pH-sensitive color-changing ink composition layer 100 of the pH-sensitive indicator packaging material 300 using the pH-sensitive color-changing ink composition according to another embodiment of the present disclosure may be also the same as the pH-sensitive color-changing ink composition layer 100 of the label 200 using the above-described pH-sensitive color-changing ink composition.

The packaging material 300 includes the second film 230, and the second film 230 may be laminated to the container 310 so that the color-changing ink composition layer 100 is disposed between the container 310 and the second film 230.

The second film 230 may be formed as a transparent film, a white film, or a colored film. In addition, in the container 310 in which the color-changing ink composition layer 100 is formed, a non-color-changing ink composition layer including at least one of a white ink composition layer and a colored ink composition layer may be formed, and the second film 230 may be formed as the transparent film. In addition, the second film may be laminated to the container on which the color-changing ink composition layer is formed after a glue or adhesive is applied to the container.

In addition, according to an embodiment, a through hole may be formed inside a portion of the container including the color-changing ink composition layer 100.

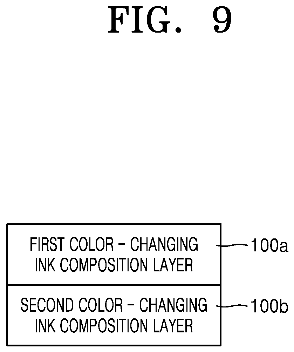

Referring to FIG. 9, the pH-sensitive color-changing ink composition layer 100 included in the pH-sensitive indicator label 200 using the color-changing ink composition according to the embodiment of the present disclosure and the pH-sensitive indicator packaging material 300 using the color-changing ink composition according to the embodiment of the present disclosure may consist of a plurality of layers.

The color-changing ink composition layer 100 may be prepared to form one layer (a first color-changing ink composition layer 100a), and another color-changing ink composition layer 100 may be prepared to form another layer (a second color-changing ink composition layer 100b). As such, when the color-changing ink composition layer 100 consists of a plurality of layers, it is possible to implement different color changes in each layer, and as a color change occurs in the plurality of layers, there is an advantage that a visible color change may be induced by implementing a mixed color.

The kimchi packaging material using the color-changing ink composition according to the embodiment of the present disclosure uses the packaging material using the color-changing ink composition according to the embodiment of the present disclosure, and a product packaged in the container is kimchi.

The kimchi packaging material using the color-changing ink composition according to an embodiment of the present disclosure may include a container into which kimchi is inserted, and an ink composition in the container in a region not in contact with kimchi. A method of including the ink composition in the container may use a label in the same manner as in the above-described method, and the ink composition may be directly printed on the container. (The ink composition, the label, and the packaging material applied to the kimchi packaging material using the color-changing ink composition according to the embodiment of the present disclosure are the same as those described above, and thus detailed descriptions thereof will be omitted.)

The kimchi packaging material using the color-changing ink composition according to the embodiment of the present disclosure absorbs carbon dioxide generated from kimchi to change the color of the ink composition, and may display the condition of kimchi to the user by sensing carbon dioxide generated according to the condition of kimchi.

For this purpose, the pH-sensitive indicator of the kimchi packaging material using the color-changing ink composition according to the embodiment of the present disclosure is mixed with two or more pH color-changing dyes among Thymol Blue, Methyl red, Bromothymol blue, Phenolphthalein, Phenol Red, and Bromocresol green, and an adsorption compound may be polyethylene imine.

A final ink composition may be prepared by stirring and dissolving the pH-sensitive indicator prepared by mixing two or more pH color-changing dyes among Thymol Blue, Methyl red, Bromothymol blue, Phenolphthalein, Phenol Red, and Bromocresol green in the dissolving ink, and stirring polyethylene imine. Here, the ink composition may be basic by stirring polyethylene imine.

The ink composition may be basic with a pH of 10 or higher through polyethylene imine, and in this case, the ink composition has a blue color. When carbon dioxide is generated from kimchi according to the condition of kimchi, the kimchi packaging material adsorbs carbon dioxide through polyethylene imine which is the adsorption compound to reduce the pH and changes kimchi to acid. According to the pH, the pH-sensitive indicator (the pH color-changing dye) reacts and its color changes so that the kimchi packaging material may display the condition of kimchi that changes from basic to acid.

The color-changing ink composition and the label and packaging material using the same according to the embodiment of the present disclosure described above have the following effects.

The label and the packaging material using the pH-sensitive color-changing ink composition according to an embodiment of the present disclosure may prepare the pH-sensitive indicator by mixing a plurality of pH color-changing dyes to enable the ink composition to change in various colors according to pH changes, thereby informing consumers of various conditions of the product.

In addition, the label and the packaging material using the pH-sensitive color-changing ink composition according to the embodiment of the present disclosure may determine the condition of the product through gas generated from the product, thereby determining the condition of the product in a non-contact manner to the product.

In addition, the label and the packaging material using the pH-sensitive color-changing ink composition according to the embodiment of the present disclosure may user a white ink composition, a complementary ink composition, an ink composition of an initial color represented by the ink composition, an ink composition of a complete color represented by the ink composition, a white film, a film of the complementary color, a film of the initial color represented by the ink composition, and a film of the complete color represented by the ink composition, thereby improving the visibility of the color-changing ink composition.

As described above, the present disclosure is described in detail with reference to embodiments, and the present disclosure is not limited to the above-described embodiments, and various modifications may be made without departing from the scope of the present disclosure. Accordingly, the true technical protection scope of the present disclosure should be defined by the scope of the appended claim.

## Claims

1. A pH-sensitive indicator packaging material using an ink composition of which color changes by a reaction, the pH-sensitive indicator packaging material comprising:
a container into which a product may be inserted;
a through hole passing through the container in an area not in contact with the product; and
a label attached to the through hole,
wherein the label comprises:
a pH-sensitive color-changing ink composition layer comprising a pH-sensitive color-changing ink composition;
a first film on which the pH-sensitive color-changing ink composition layer is formed; and
a second film laminated onto the first film so as to cover the pH-sensitive color-changing ink composition formed on the first film,
wherein the pH-sensitive color-changing ink composition of the pH-sensitive color-changing ink composition layer comprises:
a pH-sensitive indicator prepared by mixing a plurality of pH color-changing dyes of which colors change according to pH ranges and a dissolving ink capable of dissolving the pH-sensitive indicator,
wherein the label is attached to the container while covering the through hole, and a gas generated from the product is moveable to the label through the through hole.

## Patentansprüche

1. pH-Wert empfindliches Indikatorverpackungsmaterial, das eine Tintenzusammensetzung verwendet, deren Farbe sich durch eine Reaktion ändert, wobei das pH-Wert empfindliche Indikatorverpackungsmaterial umfasst:
einen Behälter, in den ein Produkt eingesetzt werden kann;
ein Durchgangsloch, das durch den Behälter in einem Bereich hindurchgeht, der nicht mit dem Produkt in Kontakt steht; und
ein Etikett, das an dem Durchgangsloch angebracht ist,
wobei das Etikett umfasst:
eine Schicht aus einer pH-Wert empfindlichen, farbwechselnden Tintenzusammensetzung, die eine pH-Wert empfindliche, farbwechselnde Tintenzusammensetzung umfasst;
eine erste Folie, auf der die Schicht aus der pH-Wert empfindlichen, farbwechselnden Tintenzusammensetzung ausgebildet ist; und
eine zweite Folie, die auf die erste Folie laminiert ist, um die auf der ersten Folie ausgebildete pH-Wert empfindliche, farbwechselnde Tintenzusammensetzung zu bedecken,
wobei die pH-Wert empfindliche, farbwechselnde Tintenzusammensetzung der Schicht aus der pH-Wert empfindlichen, farbwechselnden Tintenzusammensetzung umfasst:
einen pH-Wert empfindlichen Indikator, der durch Mischen einer Mehrzahl von farbwechselnden pH-Wert-Farbstoffen, deren Farben sich gemäß den pH-Wertbereichen ändern, und einer auflösenden Tinte hergestellt wird, die den pH-Wert empfindlichen Indikator auflösen kann,
wobei das Etikett an dem Behälter angebracht ist, während es das Durchgangsloch bedeckt, und ein von dem Produkt erzeugtes Gas durch das Durchgangsloch zu dem Etikett beweglich ist.

## Revendications

1. Matériau de conditionnement à indicateur sensible au pH utilisant une composition d'encre dont la couleur change par l'intermédiaire d'une réaction, le matériau de conditionnement à indicateur sensible au pH comprenant :
un contenant dans lequel peut être inséré un produit ;
un trou traversant passant à travers le contenant dans une zone non en contact avec le produit ; et
un étiquette fixée au trou traversant, dans lequel l'étiquette comprend :
une couche de composition d'encre changeant de couleur sensible au pH comprenant une composition d'encre changeant de couleur sensible au pH ;
un premier film sur lequel est formée la couche de composition d'encre changeant de couleur sensible au pH ; et
un second film stratifié sur le premier film afin de couvrir la composition d'encre changeant de couleur sensible au pH formée sur le premier film,
dans lequel la composition d'encre changeant de couleur sensible au pH de la couche de composition d'encre changeant de couleur sensible au pH comprend :
un indicateur sensible au pH préparé en mélangeant une pluralité de colorants changeant de couleur au pH dont des couleurs changent selon des plages de pH et une encre dissolvante capable de dissoudre l'indicateur sensible au pH,
dans lequel l'étiquette est fixée au contenant tout en couvrant le trou traversant, et un gaz généré à partir du produit peut se mouvoir jusqu'à l'étiquette à travers le trou traversant.
